# EUROPEAN PATENT SPECIFICATION

(11) **EP 3 124 722 B1**
(45) Date of publication and mention of the grant of the patent: **17.01.2018**
(21) Application number: 16176586.2
(22) Date of filing: 28.06.2016
(51) Int. Cl.: E05B 19/00

(54) **DETECTION DEVICE OF THE ENCRYPTION OF A KEY**
ERKENNUNGSVORRICHTUNG DER VERSCHLÜSSELUNG EINES SCHLÜSSELS
DISPOSITIF DE DÉTECTION DU CRYPTAGE D'UNE CLÉ

(30) Priority: 31.07.2015 IT IT20150812
(43) Date of publication of application: 01.02.2017
(73) Proprietor: ISEO SERRATURE S.p.A., 25055 Pisogne (Brescia) (IT)
(72) Inventor: ZAMBETTI, Paolo, 25047 Darfo Boario Terme (Brescia) (IT)
(74) Representative: Rapisardi, Mariacristina

(56) References cited:
- US-A- 4 283 859
- US-A- 4 432 142

## Description

The present invention relates to a detection device of the encryption of a key.

As known, there are currently devices on the market for detecting the encryption of a key that are provided with a mechanical system equipped with a row of mechanical probes. A device for the encryption of a key according to the preamble of claim 1 is thereby known from document US 4 283 859 A. Each probe has, on the side facing the encryption line of the key, a tip end that is suitable for detecting the various encryption height differences compared with the surface of the face of the body of the key.

Depending on the height difference that each probe detects, there will be a precise movement that is detected mechanically, and, after being translated into an electric signal, it is normally used for the operation of a machine tool.

This operation is performed for each encryption line present on the same face of the key and for each encryption line that is on a different face, normally arranged orthogonally to the first.

These devices for detecting the encryption of a key are housed in numerical control machines that are suitable for making the cylinder of the lock on the basis of the detected encryption.

These devices, as is easily intuited from what has been mentioned above, in addition to not reaching a high degree of detection precision of the encryption, are also slow in performing this task inasmuch as they can read only and exclusively one encryption line at a time.

Further, they are rather bulky and thus, as said, are usable only in a numerical control machine for manufacturing cylinders.

The technical task which the present invention sets itself is, therefore, to create a detection device of the encryption of a key which makes it possible to eliminate the technical drawbacks complained of in the prior art.

As part of this technical task, one object of the invention is to make a detection device of the encryption of a key that enables the encryption to be detected in an extremely short time because it is able to read at least two encryption lines simultaneously.

Another object of the invention is to make a detection device of the encryption of a key that enables the quality of the detection to be maintained constant over time.

Another object of the invention is to make a detection device of the encryption of a key that enables extremely flexible use to be made as it can also be used in places that are far from the position of the numerical control machine for producing the cylinders of the locks.

The above technical task and these and other objects according to the present invention are reached by making a detection device of the encryption of a key comprising a body in which there is at least one seat for inserting a key and reading means of at least a first and a second encryption line that extend in the same direction as the axis of said key and is arranged near said seat, whereby said reading means comprises at least a first and a second group of mechanical probes for the mechanical reading, respectively, of said first and second encryption line, characterised in that said first and second mechanical probes have respectively a first and a second reference surface lying on the same line that is positioned in such a manner as to be detectable by a single optical detection device that is movable in the direction of said axis of said key.

Further features of the present invention are defined also by the subsequent claims.

Further characteristics and advantages of the invention will more fully emerge from the description of a preferred but not exclusive embodiment of a detection device of the encryption of a key according to the invention, illustrated by way of indicative and non-limiting example in the accompanying drawings, in which:

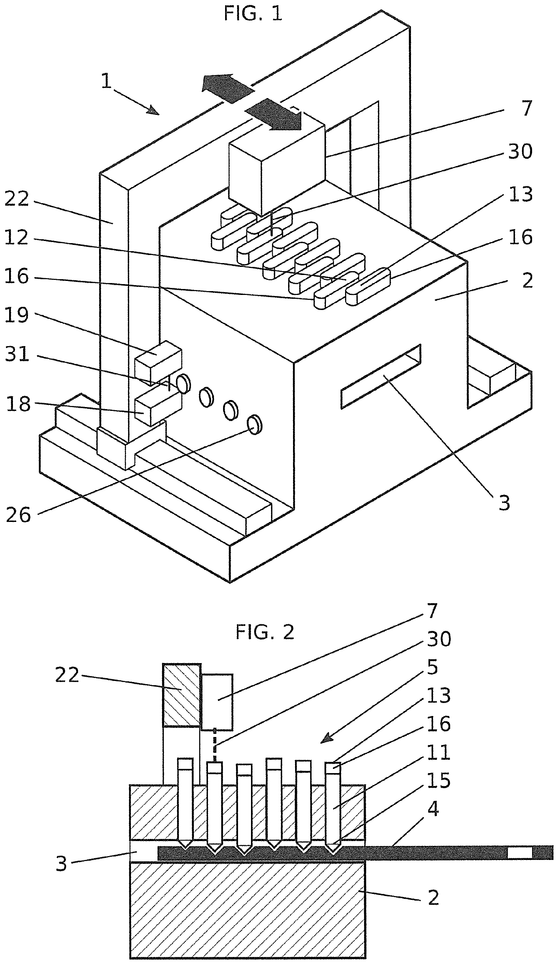

Fig.1 is a schematic perspective view of the detection device of the encryption of a key according to the invention;
Fig.2 is a raised lateral sectional schematic view of the device in fig. 1 with the key inserted according to the invention;
Fig.3 is a sectional plan schematic view of the device in fig. 2 according to the invention; and
Fig.4 is a sectional frontal raised schematic view of the device in fig. 2 according to the invention.

With particular reference to the figures disclosed above, the detection device of the encryption of a key is indicated overall by the reference number 1.

The device 1 comprises, in the essential parts, a body 2 in which a seat 3 is present for inserting a key 4.

Near the seat 3, first reading means is present, which is generally indicated with 5, with at least a first and second encryption line 6 and 7 that extend along the axis 8 of the key 4.

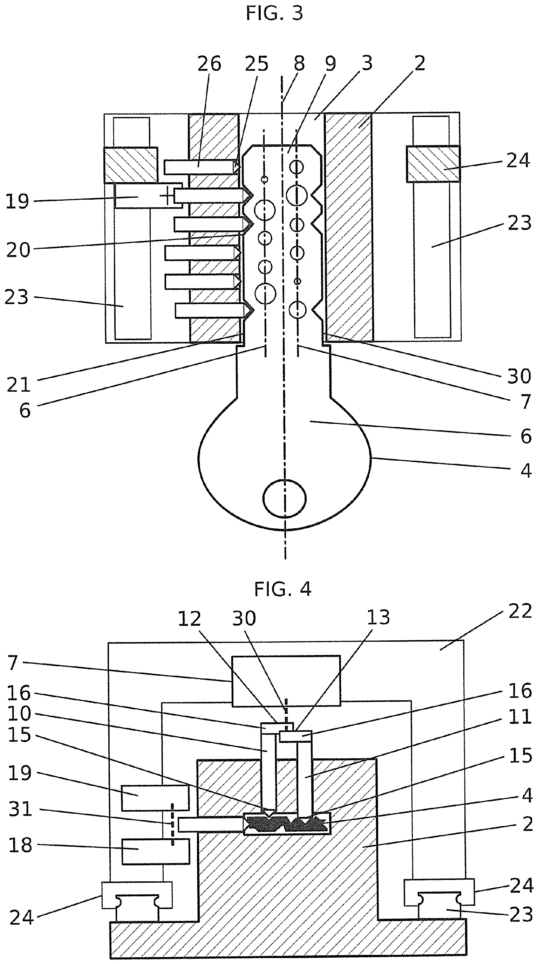

As visible in figs. 3 and 4, the first and the second encryption line 6 and 7 are arranged on the same first face 9 of the key 4.

In particular, the first reading means 5 has at least a first and a second group of mechanical probes 10 and 11 that are able to read mechanically respectively the first and the second encryption line 6 and 7.

The mechanical probes 10 and 11 respectively have a first and a second reference surface 12 and 13 the lying portions of which are alongside one another on the same line that is positioned in such a manner as to be detectable by a single optical detection device, which can be a laser 7, which is movable in the same direction as the axis 8 of the key 4.

In particular the mechanical probes 10 and 11 have on the side facing the key 4 a tip end 15 and, on the side opposite the tips 15, the reference surfaces 12 and 13 which are advantageously defined by widened heads 16.

The mechanical probes 10 and 11 are moreover movable orthogonally to the first face 9 of the key 4 in contrast to and through the action of elastic members, which are not shown in the drawings, which can be springs pushing against the encryption lines 6 and 7.

In a preferred solution the first optical reading means, in addition to comprising the laser 7, can also comprise at least a second optical reading means that is movable simultaneously thereto and has in a preferred solution a LED 18 and an infrared sensor 19.

By means of the LED 18 and the sensor 19 it is possible to read at least one third encryption line 20 arranged on a second face 21 of the key 4 located orthogonally to the first face 9.

Opportunely, the device comprises a single support element 22 of both the first and the second optical reading means 7 and 18 and 19 that is able to translate them along two opposite guides 23 by means of two sliding blocks 24 with respect to the body 2.

In this manner, with a single translation of the support element 22 it is possible to move the laser 7 above the face 9 of the key 4 and the LED 18 and the infrared sensor 19 to the side of the second face 21 thereof.

The second optical reading means also comprises a group of third mechanical probes each having on the side facing the key 4 a tip end 25 and a small piston 26 on the side opposite the tip.

Depending on the encryption 20 present on the side 21 of the key, there will be a movement of the small pistons, which small pistons will be detected by the beam of the LED, interrupting the detecting thereof by the infrared sensor 19 so as to detect the positioning thereof of the small pistons 26 and thus the lateral encryption of the key.

The type of laser that can be used is a laser that is suitable for measuring with single-point triangulation to measure distance and position at high speed with accuracy and precision.

Nevertheless, any other type of similar laser can be used.

As seen, by moving the support element 22, several encryption lines of a key can be read simultaneously precisely and fast.

Obviously it is possible, by using the concept indicated above, to detect the encryption also of the lower face and of the other side of the key, i.e. to detect simultaneously two upper encryption lines, and two lower encryption lines and two opposite lateral encryption lines.

Only for the sake of greater detail and clarity is it pointed out that the device 1 for detecting the encryption of a key is also suitable for controlling a machine for automatically producing corresponding cylinders for locks and can be suitably incorporated into the machine or be arranged in a place that is remote therefrom.

The operation of the device appears clearly from what is set forth above.

After inserting the key 4 inside the suitable seat 3 in a correct position, the mechanical probes 10, 11 are activated simultaneously that are positioned according to the encryptions present on the key.

By translating the support element 22 the laser 7 moves that in a single stroke reads at least the two encryption lines 6 and 7 simultaneously due to the presence of the widened heads 16.

If the device is also set up for reading a third encryption, located on a second lateral face 21 of the key 4, simultaneously to encryptions 6 and 7 it is possible to read said third lateral encryption 20 by means of the light beam 31 emitted by the LED 18 and detected by the sensor 19 inasmuch as they are also supported by the same support element 22.

It has been noted in practice that the detection device of the encryption of a key according to the invention is particularly advantageous for reducing significantly the times for reading two adjacent encryption lines of a key.

The detection device of the encryption of a key as conceived herein is susceptible to many modifications and variations, all falling within the scope of the inventive concept and all the details are replaceable by technically equivalent elements.

The materials used, as well as the dimensions, may in practice be of any type, according to needs and the state of the art.

## Claims

1. Device (1) for detecting the encryption of a key (4) comprising a body (2) in which there is at least one seat (3) for inserting a key (4) and reading means (5) of at least a first and a second encryption line (6, 7) that extends in the same direction as the axis (8) of said key (4) and which is arranged near said seat, whereby said reading means (5) comprises at least a first and a second group of mechanical probes (10, 11) for the mechanical reading, respectively, of said first and second encryption line (6, 7), **characterised in that** said first and second group of mechanical probes (10, 11) have respectively a first and a second reference surface (12, 13) lying on the same line positioned in such a manner as to be detectable by a single optical detection device (7) that is movable in the direction of said axis of said key.

2. Detection device of the encryption of a key according to claim 1, **characterised in that** said mechanical probes (10, 11) have on the side facing said key (4) a tip end (15) and, on the side opposite said tips, said reference surfaces (12, 13) defined by widened heads (16).

3. Detection device of the encryption of a key according to claim 1, **characterised in that** said mechanical probes (10, 11) are movable in contrast and through the action of elastic members.

4. Detection device of the encryption of a key according to claim 1, **characterised in that** said at least first and second encryption line (6, 7) are arranged on the same first face (9) of said key (4).

5. Detection device of the encryption of a key according to claim 1, **characterised in that** said first optical reading means comprises a laser (7).

6. Detection device of the encryption of a key according to claim 1, **characterised in that** said first optical reading means comprises at least second optical reading means (18, 19) that is movable simultaneously with said first optical reading means.

7. Detection device of the encryption of a key according to claim 1, **characterised in that** said at least second optical reading means comprises a LED (18) and an infrared sensor (19).

8. Detection device of the encryption of a key according to claim 1, **characterised in that** said second optical reading means is suitable for reading at least a third encryption line (20) arranged on a second face (21) of said key (4) located orthogonally to said first face.

9. Detection device of the encryption of a key according to claim 1, **characterised in that** it comprises a single support element (22) of said first and at least said second optical reading means.

10. Detection device of the encryption of a key according to claim 1, **characterised in that** it controls a machine for the automatic creation of corresponding cylinders for locks, said device being incorporated into said machine or being arranged in a place that is remote therefrom.

## Patentansprüche

1. Vorrichtung (1) zur Erkennung der Verschlüsselung eines Schlüssels (4), umfassend einen Körper (2), in dem mindestens ein Sitz (3) für das Einfügen eines Schlüssels (4) ausgebildet ist, und Tastmittel (5) für mindestens eine erste und eine zweite Verschlüsselungslinie (6, 7), die sich in dieselbe Richtung wie die Achse (8) des Schlüssels (4) erstrecken und in der Nähe des Sitzes angeordnet sind, wobei die Tastmittel (5) mindestens eine erste und eine zweite Gruppe mechanischer Fühler (10, 11) für die mechanische Abtastung von jeweils der ersten und der zweiten Verschlüsselungslinie (6, 7) umfassen, **dadurch gekennzeichnet, dass** die erste und die zweite Gruppe mechanischer Fühler (10, 11) jeweils eine erste und eine zweite Referenzoberfläche (12, 13) aufweisen, liegend auf derselben Linie, positioniert so, dass sie durch eine einzelne optische Erkennungsvorrichtung (7) erfasst werden können, die in Richtung der Achse des Schlüssels bewegbar ist.

2. Erkennungsvorrichtung der Verschlüsselung eines Schlüssels nach Anspruch 1, **dadurch gekennzeichnet, dass** die mechanischen Fühler (10, 11) auf der Seite, die dem Schlüssel (4) zugewandt ist, ein spitzes Ende (15) aufweisen, und dass die Referenzoberflächen (12, 13) auf der diesen Spitzen gegenüberliegenden Seite durch erweiterte Köpfe (16) definiert sind.

3. Erkennungsvorrichtung der Verschlüsselung eines Schlüssels nach Anspruch 1, **dadurch gekennzeichnet, dass** die mechanischen Fühler (10, 11) in Kontrast mit der und durch die Wirkung elastischer Elemente bewegbar sind.

4. Erkennungsvorrichtung der Verschlüsselung eines Schlüssels nach Anspruch 1, **dadurch gekennzeichnet, dass** mindestens die erste und die zweite Verschlüsselungslinie (6, 7) auf derselben ersten Seitenfläche (9) des Schlüssels (4) angeordnet sind.

5. Erkennungsvorrichtung der Verschlüsselung eines Schlüssels nach Anspruch 1, **dadurch gekennzeichnet, dass** die ersten optischen Tastmittel einen Laser (7) umfassen.

6. Erkennungsvorrichtung der Verschlüsselung eines Schlüssels nach Anspruch 1, **dadurch gekennzeichnet, dass** die ersten optischen Tastmittel mindestens zweite optische Tastmittel (18, 19) umfassen, die gleichzeitig mit den ersten optischen Tastmitteln bewegbar sind.

7. Erkennungsvorrichtung der Verschlüsselung eines Schlüssels nach Anspruch 1, **dadurch gekennzeichnet, dass** die mindestens zweiten optischen Tastmittel eine LED (18) und einen Infrarotsensor (19) umfassen.

8. Erkennungsvorrichtung der Verschlüsselung eines Schlüssels nach Anspruch 1, **dadurch gekennzeichnet, dass** die zweiten optischen Tastmittel geeignet sind, um mindestens eine dritte Verschlüsselungslinie (20) abzutasten, angeordnet an einer zweiten Seitenfläche (21) des Schlüssels (4), befindlich rechtwinklig zur ersten Seitenfläche.

9. Erkennungsvorrichtung der Verschlüsselung eines Schlüssels nach Anspruch 1, **dadurch gekennzeichnet, dass** sie ein einzelnes Stützelement (22) für die ersten und die mindestens zweiten optischen Tastmittel umfasst.

10. Erkennungsvorrichtung der Verschlüsselung eines Schlüssels nach Anspruch 1, **dadurch gekennzeichnet, dass** sie eine Maschine für die automatische Erstellung entsprechender Zylinder für Schlösser steuert, wobei die Vorrichtung in diese Maschine integriert oder an einem Ort angeordnet ist, der von dieser entfernt ist.

## Revendications

1. Dispositif (1) de détection du cryptage d'une clé (4) comprenant un corps (2) dans lequel se trouve au moins un siège (3) servant à introduire une clé (4) et des moyens de lecture (5) d'au moins une première et une seconde ligne de cryptage (6, 7) se prolongeant dans la même direction que l'axe (8) de ladite clé (4) et étant disposée près dudit siège par lequel lesdits moyens de lecture (5) comprennent au moins un premier et un second groupe de sondes mécaniques (10, 11) destinées à la lecture mécanique, respectivement, desdites première et seconde lignes de cryptage (6, 7), **caractérisé en ce que** lesdits premier et second groupes de sondes mécaniques (10, 11) comportent, respectivement, une première et une seconde surface de référence (12, 13) reposant sur la même ligne positionnée de manière à être détectable par un dispositif de détection optique (7) unique étant mobile dans la direction dudit axe de ladite clé.

2. Dispositif de détection du cryptage d'une clé selon la revendication 1, **caractérisé en ce que** lesdites sondes mécaniques (10, 11) comportent sur le côté orienté vers ladite clé (4) une extrémité à pointe (15) et, sur le côté opposé auxdites pointes, lesdites surfaces de référence (12, 13) définies par des têtes élargies (16).

3. Dispositif de détection du cryptage d'une clé selon la revendication 1, **caractérisé en ce que** lesdites sondes mécaniques (10, 11) sont mobiles en opposition et sous l'action d'organes élastiques.

4. Dispositif de détection du cryptage d'une clé selon la revendication 1, **caractérisé en ce que** lesdites au moins première et seconde lignes de cryptage (6, 7) sont disposées sur la même première face (9) de ladite clé (4).

5. Dispositif de détection du cryptage d'une clé selon la revendication 1, **caractérisé en ce que** ledit premier moyen de lecture optique comprend un laser (7).

6. Dispositif de détection du cryptage d'une clé selon la revendication 1, **caractérisé en ce que** ledit premier moyen de lecture optique comprend au moins un second moyen de lecture optique (18, 19) étant mobile simultanément avec ledit premier moyen de lecture optique.

7. Dispositif de détection du cryptage d'une clé selon la revendication 1, **caractérisé en ce que** ledit au moins second moyen de lecture optique comprend une LED (18) et un capteur infrarouge (19).

8. Dispositif de détection du cryptage d'une clé selon la revendication 1, **caractérisé en ce que** ledit second moyen de lecture optique est adapté pour lire au moins une troisième ligne de cryptage (20) disposée sur une seconde face (21) de ladite clé (4) située orthogonalement à ladite première face.

9. Dispositif de détection du cryptage d'une clé selon la revendication 1, **caractérisé en ce qu'**il comprend un élément de support (22) unique dudit premier et au moins dudit second moyen de lecture optique.

10. Dispositif de détection du cryptage d'une clé selon la revendication 1, **caractérisé en ce qu'**il commande une machine pour la création automatique de cylindres correspondants pour des serrures, ledit dispositif étant incorporé dans ladite machine ou étant disposé dans un endroit situé à distance de celle-ci.
